# EUROPEAN PATENT APPLICATION

(11) **EP 4 446 038 A1**
(43) Date of publication of application: **16.10.2024**
(21) Application number: 24163484.9
(22) Date of filing: 14.03.2024
(51) Int. Cl.: B22F 10/34, B22F 10/28, B22F 10/38, B33Y 50/02, B33Y 10/00, B33Y 70/00, B33Y 70/10, C22C 1/04

(54) **MITIGATING DOWN SKIN EFFECTS IN ADDITIVE MANUFACTURING**

(30) Priority: 15.03.2023 US 202318121781
(71) Applicant: RTX Corporation, Farmington, CT 06032 (US)
(72) Inventor: Thayer, Henry H., Wethersfield, 06109 (US); Binek, Lawrence A., Glastonbury, 06033 (US)
(74) Representative: Schmitt-Nilson Schraud Waibel Wohlfrom Patentanwälte Partnerschaft mbB

(57) **Abstract**

A process for forming an overhang feature without downward facing surface defects in the overhang feature on a part; the process includes laying down a first layer with a first powder material on a build plate; fusing the first powder material with a first power laser beam; laying down a second layer on top of the first layer, the second layer comprising a second powder material having an additive which lowers the melting point temperature of the second powder material; forming an overhang feature from the second layer; and fusing the second powder material with a second power laser beam in the absence of forming the downward facing surface defects in the overhang feature of the part.

## Description

The present disclosure is directed to the improved additive manufacturing techniques, particularly a process to mitigate down skin effects.

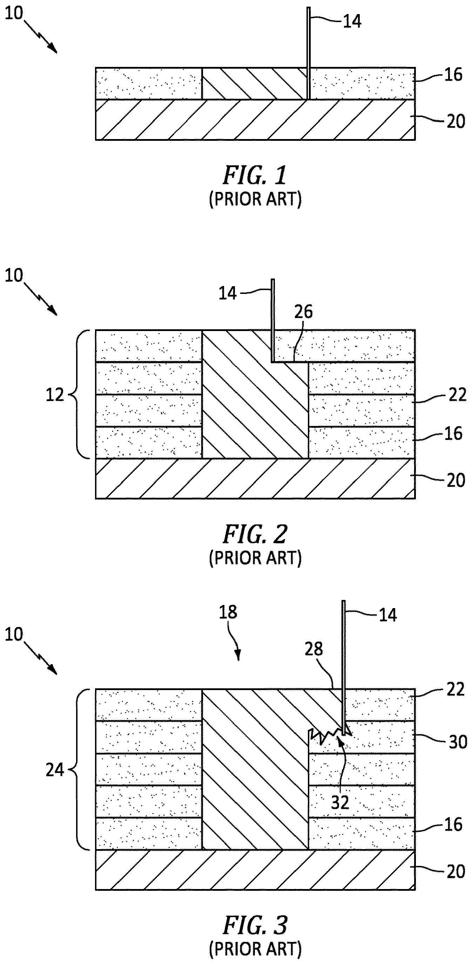

Referring to Figs. 1 to 3, in powder bed additive manufacturing, objects, such as additive parts 10 are created by fusing successive layers 12 of metal powder using laser energy. A laser beam 14 scans a powder layer 16, creating the desired shape 18. As seen in Fig. 1 the laser beam 14 fuses the first layer 16 of powder to a build plate 20. Another layer of powder 22 is added on top of the layer 16, and the laser beam 14 scans again, building up the object 10 as a series of cross sections 24. Solid material 26 blocks the laser beam 14.

This method is very effective at creating complex shapes, especially two-dimensional shapes. One of the biggest challenges in this type of additive manufacturing is the creation of overhanging features 28. The laser beam shown at Fig. 3 is fusing the powder to create an overhang feature 28. The overhang feature 28 shown is unsupported by a solidified material layer or substrate beneath the overhang feature 28 during the fabrication process. The overhang feature 28 can have an angle of above 45 degrees and down to 31 degrees from the horizontal of the build surface. The laser beam 14 can penetrate the powder 22 irregularly into the lower unfused powder layers 30. The laser energy needed to fuse the powder will generally penetrate the powder bed 22 at irregular depths, creating a rough downward facing surface 32, sometimes called a "dirty down skin," as seen in Fig. 3. The rough downward facing surface 32 is a problem requiring excess processing steps. This is not a problem when building up layers on top of the object, because the material is solid underneath the powder layer.

What is needed is a process that eliminates the rough downward facing surface formation on overhang features during additive manufacturing.

In accordance with the present disclosure, there is provided a part having an overhang feature comprising a first layer formed from a first powder material; a second layer formed from a second powder material, the second powder material including an additive configured to lower the melting temperature of the second powder material; and an overhang feature formed from the second powder material proximate the second layer, wherein the overhang feature includes a smooth underside in the absence of a downward facing surface feature.

Particular embodiments may include at least one of, or a plurality of, the following optional features. These features may be included separately from each other or in combination with each other, unless specified otherwise.

A further embodiment of any of the foregoing embodiments may additionally and/or alternatively include the first powder comprises a metal powder.

A further embodiment of any of the foregoing embodiments may additionally and/or alternatively include the first powder material is selected from the group consisting of a Nickel based alloy, a Titanium based alloy and an Aluminum based alloy, and combinations thereof.

A further embodiment of any of the foregoing embodiments may additionally and/or alternatively include the second powder material is selected from the group consisting of a Nickel based alloy, a Titanium based alloy and an Aluminum based alloy, and combinations thereof.

A further embodiment of any of the foregoing embodiments may additionally and/or alternatively include the additive is configured to dope the second powder such that the second powder is melted and fused at a lower laser energy level than the first powder.

A further embodiment of any of the foregoing embodiments may additionally and/or alternatively include the additive depresses the melting temperature of the second powder.

A further embodiment of any of the foregoing embodiments may additionally and/or alternatively include the additive is selected from the group consisting of boron, silicon, and phosphorous as a melting point depressant for Nickel based alloys.

A further embodiment of any of the foregoing embodiments may additionally and/or alternatively include the additive is selected from the group consisting of nickel and copper as melting point depressants for Titanium based alloys.

A further embodiment of any of the foregoing embodiments may additionally and/or alternatively include the additive comprises silicon to depress the melting point of Aluminum based alloys.

A further embodiment of any of the foregoing embodiments may additionally and/or alternatively include the part having an overhang feature further comprising a top layer fused to the second layer, the top layer formed from the first powder.

In accordance with the present disclosure, there is provided a process for forming an overhang feature without downward facing surface defects in the overhang feature on a part comprising laying down a first group of layers with a first powder material on a build plate; fusing the first powder material with a first power laser beam; laying down a second group of layers on top of the first group of layers, the second group of layers comprising a second powder material having an additive which lowers the melting point temperature of the second powder material; forming an overhang feature from the second group of layers; and fusing the second powder material with a second power laser beam in the absence of forming the downward facing surface defects in the overhang feature of the part.

Particular embodiments may include at least one of, or a plurality of, the following optional features. These features may be included separately from each other or in combination with each other, unless specified otherwise.

A further embodiment of any of the foregoing embodiments may additionally and/or alternatively include the process further comprising laying down a top layer on the second group of layers; and fusing the top layer to the second group of layers with the first power laser beam, wherein the top layer comprises the first powder material.

A further embodiment of any of the foregoing embodiments may additionally and/or alternatively include the second power laser fuses the second powder material without overpenetration.

A further embodiment of any of the foregoing embodiments may additionally and/or alternatively include the first powder material is selected from the group consisting of a Nickel based alloy, a Titanium based alloy and an Aluminum based alloy, and combinations thereof.

A further embodiment of any of the foregoing embodiments may additionally and/or alternatively include the second powder material is selected from the group consisting of a Nickel based alloy, a Titanium based alloy and an Aluminum based alloy, and combinations thereof.

A further embodiment of any of the foregoing embodiments may additionally and/or alternatively include the additive is selected from the group consisting of boron, silicon, and phosphorous as a melting point depressant for Nickel based alloys.

A further embodiment of any of the foregoing embodiments may additionally and/or alternatively include the additive is selected from the group consisting of nickel and copper as melting point depressants for Titanium based alloys.

A further embodiment of any of the foregoing embodiments may additionally and/or alternatively include the additive comprises silicon to depress the melting point of Aluminum based alloys.

A further embodiment of any of the foregoing embodiments may additionally and/or alternatively include the process further comprising doping selective portions of the second group of layers with the additive configured to dope the second powder, such that the second powder is melted and fused at a lower laser energy level than the first powder.

A further embodiment of any of the foregoing embodiments may additionally and/or alternatively include the process further comprising depressing the melting temperature of the second powder material by use of the additive, wherein the second power laser beam has a lower powder fusion energy level than the first power laser beam.

Other details of the process are set forth in the following detailed description and the accompanying drawings wherein like reference numerals depict like elements.
Fig. 1 is a schematic representation of a prior art additive manufacturing arrangement.
Fig. 2 is a schematic representation of a prior art additive manufacturing arrangement.
Fig. 3 is a schematic representation of a prior art additive manufacturing arrangement.
Fig. 4 is a schematic representation of an exemplary additive manufacturing arrangement.
Fig. 5 is a schematic representation of an exemplary additive manufacturing arrangement.
Fig. 6 is a schematic representation of an exemplary additive manufacturing arrangement.
Fig. 7 is a schematic representation of an exemplary additive manufacturing arrangement.
Fig. 8 is a schematic representation of an exemplary additive manufacturing arrangement.
Fig. 9 is a process map of an exemplary process.

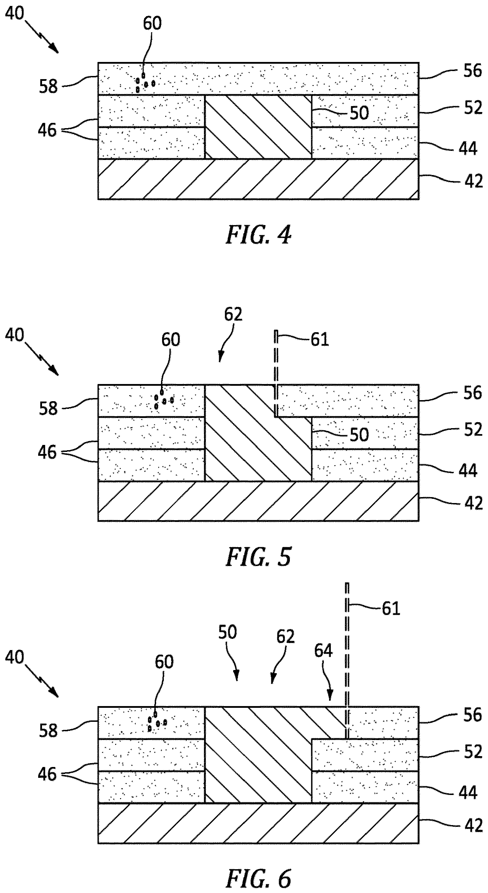

Referring now to Fig. 4 to Fig. 8, there is illustrated an exemplary additive manufacturing build 40. A build plate 42 is used to support a first layer 44 of a first powder 46. The first layer 44 can also represent a first group of layers 44, since additive processes utilize multiple layers in a build. The first powder 46 can be a metal powder, such as a Nickel based alloy, a Titanium based alloy and an Aluminum based alloy. The first powder 46 can include materials that when fused by a laser beam 48 can create the object or part 50 shown in darker shade. The first powder 46 can be fused by the laser at a first laser power.

A second layer 52 is laid down on top of the first layer 44. The second layer 52 can be part of the first group of layers. The second layer 52 can include materials similar to the first powder 46. The second layer 44 can be fused together with the first layer 16.

A third layer 56 is laid down on top of the second layer 52. The third layer 56 can represent a second group of layers that utilize a common powder material. The material of the third layer 56 comprises a second powder 58. The second powder 58 can be a metal powder, such as a Nickel based alloy, a Titanium based alloy and an Aluminum based alloy The second powder 58 includes an additive 60 that dopes the second powder 58 and allows for the second powder 58 to be melted and fused at a lower laser energy level. The doping additive 60 depresses the melting temperature of the second powder 58. Boron, silicon, and phosphorous can be used as the additive 60 for melting point depressants for Nickel based alloys. There are also combinations of boron and silicon that can be used. In exemplary embodiments, nickel and copper can be used as melting point depressants for Titanium based alloys. Silicon can be used to depress the melting point of Aluminum based alloys. Examples of additive 60 can include a boron with a range of 5% to 20% by weight for Nickel alloys. A silicon additive 60 with a range of 8% to 15% by weight for Aluminum alloys. A silicon additive 60 with a range of 10% to 15% by weight for a Titanium alloy. A nickel additive 60 with a range of 20% to 45% by weight for a Titanium alloy. A nickel additive 60 with a range of 25% to 38% by weight for a Titanium alloy. A copper additive 60 with a range of 10% to 12% by weight for a Titanium alloy. A copper additive 60 with a range of 10% to 44% by weight for a Titanium alloy. A silicon additive 60 at about 10% by weight for a Nickel alloy. A silicon additive 60 with a range of 30% to 40% by weight for a Nickel alloy.

As seen in Fig. 5 and Fig. 6, the laser beam 61 passes over the second powder 58 and fuses the second powder 58 to form the third layer 56 portion of a part 62 that includes an overhang feature 64. The laser beam 61 can fuse the second powder 58 at a lower energy level than was needed to fuse the first powder 46, due to the doping additive 60. The lower energy level of the laser beam 61 reduces the chances of creating a downward facing surface, such as a down skin. The lower energy laser beam 61 has a lower chance of over-penetrating the third layer 56 and forming the downward facing surface defects in the overhang feature 64. The overhang feature 64 can have a smooth underside 63 in the absence of over-penetrating laser effects.

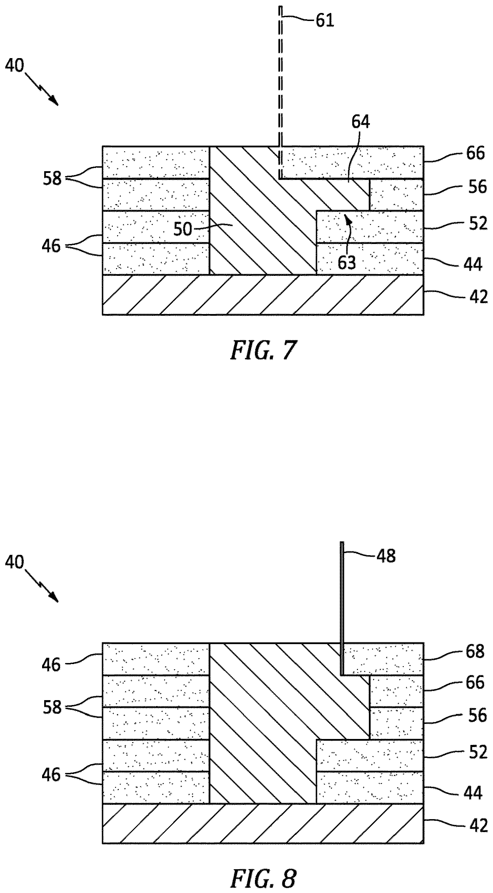

Referring also to Fig. 7 and Fig. 8, once the third layer 56 has been laid down, a fourth layer 66 can be laid down. The fourth layer 66 can be part of the second group of layers. The fourth layer 66 can include the second powder 58 including the additive 60. The additive 60 can reduce the melting temperature of the second powder 58. The fourth layer 66 can be fused with the third layer 56 to form the overhang feature 64. The third layer 56 having already been fused becomes solid and helps to prevent the laser beam 61 from over-penetrating into the third layer 56. The laser beam 61 penetrates the powder bed of the second powder 58 less than normal.

A fifth layer 68 can be laid down on top of the fourth layer 66. The fifth layer 68 can comprise the first powder 46. Having established the overhang feature 64 by employing the second powder 58 and lower power laser beam 61, the material of the overhang feature 64 has become solid and is not as susceptible to the laser beam 48 over-penetrating into the fourth layer 66 and does not create the risk of the downward facing surface defects 32. The fifth layer 68 can be processed similarly to the first layer 44 and second layer 52 utilizing the first powder 46.

The additive 60 can diffuse into the bulk of the material of the object 10 in a manner similar to transient liquid phase brazing.

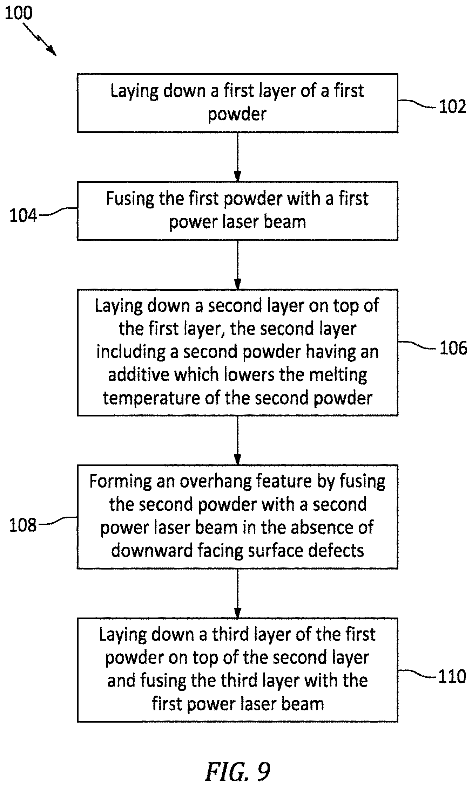

Referring to Fig. 9 a process map illustrates the exemplary additive manufacturing process 100. In the step 102 of the process 100, a first layer of a first powder material is laid down on a build plate. The step 104 includes fusing the first powder material of the first layer utilizing a first power laser beam. At step 106 a second layer utilizing a second powder with an additive that lowers the melting temperature of the second powder is laid down on top of the first layer. At step 108 an overhang feature is formed by fusing the second powder with a second power laser beam that has lower power than the first power laser beam. The overhang feature is formed in the absence of a downward facing surface defect. At step 110 a third layer including the first powder is laid down on top of the second layer and fused employing the first laser power laser beam. Additional layers of the first powder can be laid down and fused using the first power laser beam. It is also contemplated that the additive can be integrated into a powder at a particular location of the powder build, to allow for the use of the lower power laser to fuse the material with a reduced risk of overpenetration.

A technical advantage of the disclosed additive manufacturing process includes the depressed melting point of the second powder will allow processing at lower laser energy and reduce the penetration of the powder bed, which will result in a smoother underside for the overhanging features.

Another technical advantage of the disclosed additive manufacturing process includes additional layers are added at standard parameters, with the standard material, the additive, or other melting point depressing element, will diffuse into the bulk of the part and the melting point of the down skin will rise to near that of the bulk material.

Another technical advantage of the disclosed additive manufacturing process includes the down side is smoother, thus there will be less need to machine these surfaces, saving cost, reducing the chance of damage, and allowing a wider range of shapes to be made.

Another technical advantage of the disclosed additive manufacturing process includes the process of the second powder layers at lower laser power creates less risk of penetrating the powder bed.

There has been provided an additive manufacturing arrangement. While the additive manufacturing arrangement has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A part having an overhang feature comprising:
a first layer formed from a first powder material;
a second layer formed from a second powder material, the second powder material including an additive configured to lower the melting temperature of the second powder material; and
an overhang feature formed from the second powder material proximate the second layer, wherein the overhang feature includes a smooth underside in the absence of a downward facing surface feature.

2. The part having an overhang feature according to claim 1,
wherein the first powder comprises a metal powder.

3. The part having an overhang feature according to claim 1 or 2,
wherein the first powder material is selected from the group consisting of a Nickel based alloy, a Titanium based alloy and an Aluminum based alloy, and combinations thereof.

4. The part having an overhang feature according to any of claims 1 to 3,
wherein the second powder material is selected from the group consisting of a Nickel based alloy, a Titanium based alloy and an Aluminum based alloy, and combinations thereof.

5. The part having an overhang feature according to any of claims 1 to 4,
wherein the additive is configured to dope the second powder such that the second powder is melted and fused at a lower laser energy level than the first powder.

6. The part having an overhang feature according to any of claims 1 to 5,
wherein the additive depresses the melting temperature of the second powder.

7. The part having an overhang feature according to any of claims 1 to 6,
wherein the additive is selected from the group consisting of boron, silicon, and phosphorous as a melting point depressant for Nickel based alloys.

8. The part having an overhang feature according to any of claims 1 to 7,
wherein the additive is selected from the group consisting of nickel and copper as melting point depressants for Titanium based alloys.

9. The part having an overhang feature according to any of claims 1 to 8,
wherein the additive comprises silicon to depress the melting point of Aluminum based alloys.

10. The part having an overhang feature according to any of claims 1 to 9,
further comprising:
a top layer fused to the second layer, the top layer formed from the first powder.

11. A process for forming an overhang feature without downward facing surface defects in the overhang feature on a part comprising:
laying down a first group of layers with a first powder material on a build plate;
fusing the first powder material with a first power laser beam;
laying down a second group of layers on top of the first group of layers, the second group of layers comprising a second powder material having an additive which lowers the melting point temperature of the second powder material;
forming an overhang feature from the second group of layers; and
fusing the second powder material with a second power laser beam in the absence of forming the downward facing surface defects in the overhang feature of the part.

12. The process of claim 11,
wherein the second power laser fuses the second powder material without overpenetration; and/or.
further comprising:
laying down a top layer on the second group of layers; and
fusing the top layer to the second group of layers with the first power laser beam, wherein the top layer comprises the first powder material.

13. The process of claim 11 or 12,
wherein the first powder material is selected from the group consisting of a Nickel based alloy, a Titanium based alloy and an Aluminum based alloy, and combinations thereof; and/or
wherein the second powder material is selected from the group consisting of a Nickel based alloy, a Titanium based alloy and an Aluminum based alloy, and combinations thereof.

14. The process of any of claims 11 to 13,
wherein the additive is selected from the group consisting of boron, silicon, and phosphorous as a melting point depressant for Nickel based alloys; and/or
wherein the additive is selected from the group consisting of nickel and copper as melting point depressants for Titanium based alloys; and/or
wherein the additive comprises silicon to depress the melting point of Aluminum based alloys.

15. The process of any of claims 11 to 14,
further comprising:
doping selective portions of the second group of layers with the additive configured to dope the second powder, such that the second powder is melted and fused at a lower laser energy level than the first powder; and/or
depressing the melting temperature of the second powder material by use of the additive, wherein the second power laser beam has a lower powder fusion energy level than the first power laser beam.
